# EUROPÄISCHE PATENTSCHRIFT

(11) **EP 1 481 235 B1**
(45) Veröffentlichungstag und Bekanntmachung des Hinweises auf die Patenterteilung: **02.07.2008**
(21) Anmeldenummer: 03711881.7
(22) Anmeldetag: 11.02.2003
(51) Int. Cl.: G01N 21/55, A47L 15/42

(54) **WASSERFÜHRENDES GERÄT MIT EINER VORRICHTUNG ZUR ÜBERPRÜFUNG DER BELAGBILDUNG**
WATER-CARRYING DEVICE WITH APPARATUS FOR MONITORING THE FORMATION OF A DEPOSITION COATING
APPAREIL A CIRCULATION D'EAU AVEC UN DISPOSITIF POUR CONTROLER LA FORMATION D'UN DEPOT

(30) Priorität: 26.02.2002 DE 10208214
(43) Veröffentlichungstag der Anmeldung: 01.12.2004
(73) Patentinhaber: BSH Bosch und Siemens Hausgeräte GmbH, 81739 München (DE)
(72) Erfinder: EIERMANN, Rüdiger, 89428 Sygenstein (DE); JERG, Helmut, 89537 Giengen (DE)
(86) Internationale Anmeldenummer: PCT/EP2003/001328
(87) Internationale Veröffentlichungsnummer: WO 2003/071917

(56) Entgegenhaltungen:
- EP-A- 0 966 914
- EP-A- 0 972 486
- WO-A-00/46572
- DE-A- 19 626 203
- DE-A- 19 714 695
- DE-A- 19 740 266
- US-A- 5 926 269
- US-B1- 6 300 638

## Beschreibung

Die Vorrichtung betrifft ein wasserführendes Haushaltsgerät gemäß dem Oberbegriff des Patentanspruchs 1.

Bei der Verwendung von wasserführenden Haushaltgeräten, insbesondere Haushalt-Geschirrspülmaschinen, wird in Gegenden mit hoher Wasserhärte vor jedem Spülvorgang die Spülflotte in einer Wasserenthärtungseinrichtung enthärtet. Bei der Verwendung von nicht ausreichend enthärtendem Wasser bilden sich im Trocknungsvorgang charakteristische Kalkablagerungen auf dem Spülgut, welche insbesondere auf Gläsern und glänzenden Edelstahloberflächen einen optisch nachteiligen Effekt haben. Zur Vermeidung dieser Kalkablagerungen wird herkömmlicherweise der Ionentauscher regelmäßig regeneriert, so dass in dem der Regenerierung nachfolgenden Spülvorgang keine Kalkablagerungen zu erwarten sind. Da die Enthärtungsqualität des Ionentauschers zwischen den Regenerierungen stetig abnimmt und somit die Belaghäufigkeit zunimmt, ist es wünschenswert, eine Tendenz der Belaghäufigkeit und -dichte frühzeitig zu erkennen, um entsprechende Regenerierungsmaßnahmen zu ergreifen.

Aus der DE-OS 198 25 981 ist ein Verfahren und eine Vorrichtung zur Wasserenthärtung in einem programmgesteuerten wasserführenden Haushaltgerät bekannt, in dem während eines Teilprogramms ein Regenerierungsvorgang für einen Ionenaustauscher durch Zugabe einer Solemenge und während eines weiteren Teilprogramms ein Spülprogramm durchgeführt wird.

Zur Durchführung des bekannten Verfahrens wird eine Veränderung der Wasserhärte anhand von Kalkablagerungen an einer lichtdurchlässigen Fläche von einem Sensor mit einem optischen Signal aussendenden Element und einem optische Signale empfangenden Element gemessen und ein Zeitpunkt zur Durchführung des Regenerierungsvorganges in Abhängigkeit von der gemessenen Kalkablagerung bestimmt, wobei eine Steuereinheit die Signale entsprechend verarbeitet und einen Regenerierungsvorgang einleitet.

Als nachteilig hat sich bei der bekannten Vorrichtung erwiesen, dass nicht nur durch Kalkablagerungen auf der lichtdurchlässigen Fläche entsprechende Messwerte geliefert werden, sondern dass auch Schmutzpartikel und andere großflächigere Schmutzelemente den Strahlungsweg zwischen dem aussendenden und empfangenden Element beeinträchtigen und so zu verfälschenden Messergebnissen führen. Ferner hat sich als nachteilig erwiesen, dass bereits eine Trübung der Linse der optischen Signale aussendenden Elemente bzw. der optischen Signale empfangenden Elemente auch beim unveränderten optischen Eigenschaften der lichtdurchlässigen Fläche Messwerte liefern, die den Schluss zulassen, dass ein Regenerierungsbedarf besteht.

Aus der DE 197 40 266 A1 ist eine Vorrichtung zum Nachweis von Tensiden in wässriger Lösung bekannt. Die Vorrichtung gemäß der DE 197 40 266 A1 weist ein lichtdurchlässiges Element mit zwei Abschlussflächen auf. Das lichtdurchlässige Element ist in einem kammerartigen Bereich angeordnet, der mindestens eine Öffnung aufweist, die in einen Innenraum eines wasserführenden Haushaltgeräts mündet. Ferner weist der kammerartige Bereich ein Ventil auf, welches dazu geeignet ist, den kammerartigen Bereich zu entleeren. Die Abschlussflächen des lichtdurchlässigen Elements sind so angeordnet, dass diese stets frei von Belag sind. Außerdem weist die Vorrichtung gemäß der DE 197 40 266 A1 ein ein optisches Signal aussendendes Element und ein ein optisches Signal empfangendes Element auf.

Aus der WO 00/46572 ist eine Vorrichtung zum Ermitteln von Anlagerungen an Oberflächen, insbesondere in Wasch- und/oder Spülmaschinen bekannt. Diese Vorrichtung weist ebenfalls ein lichtdurchlässiges Element mit zwei Anschlussflächen sowie ein ein optisches Signal aussendendes Element und ein ein optisches Signal empfangendes Element auf.

Aufgabe der vorliegenden Erfindung ist es daher, ein wasserführendes Gerät, insbesondere für den Haushalt mit einer Vorrichtung bereitzustellen, welche es erlaubt, die Belagbildung bzw. einen Tendenzverlauf der Belagbildung zu bestimmen und entsprechende Maßnahmen zur Einstellung einer gewünschten Belagbildung zu erzielen.

Diese Aufgabe wird durch ein wasserführendes Gerät mit den Merkmalen gemäß Anspruch 1 gelöst. Vorteilhafte Weiterbildungen der Erfindung sind durch Unteransprüche sowie durch weitere nebengeordnete Ansprüche gekennzeichnet.

Die Vorrichtung zur Überprüfung der Belagbildung bestehend aus einem lichtdurchlässigen Element mit zwei Abschlussflächen, weist ferner mindestens ein ein optisches Signal aussendendes Element und mindestens ein ein optisches Signal empfangendes Element auf, wobei die Abschlussflächen so angeordnet sind, dass diese stets frei von Belag sind.

Dabei ist das lichtdurchlässige Element in einem kammerartigen Bereich angeordnet, wobei der kammerartige Bereich mindestens eine Öffnung aufweist, die in einen Innenraum eines wasserführenden Haushaltgeräts, wie eines Spülbehälters mündet sowie ferner ein Ventil aufweist, welche dazu geeignet ist, den kammerartigen Bereich zu entleeren.

Erfindungsgemäß ist vorgesehen, dass dass jeweils das das optische Signal aussendende und das das optische Signal empfangende Element an die Abschlussflächen unmittelbar anschließt und der Betrieb des Ventils und die Trocknung des lichtdurchlässigen Elements durch dasselbe Heizelement erfolgt.

Vorteilhafterweise ist das lichtdurchlässige Element stabförmig ausgebildet bzw. ausgehend von einer Stabform wendelartig ausgebildet.

Vorzugsweise ist das Ventil über ein Stellelement mit Memoryeffekt antreibbar.

Zweckmäßigerweise ist die erfindungsgemäße Vorrichtung in der Innentür eines wasserführenden Haushaltgeräts, insbesondere einer Geschirrspülmaschine angeordnet und weist eine entsprechende Öffnung auf, durch die Spülflüssigkeit zirkulieren, bzw. in den kammerartigen Bereich eintreten kann.

Nach dem der kammerartige Bereich während der Spülphase mit Spülflüssigkeit gefüllt worden ist, wird sich eine entsprechende Menge der Spülflüssigkeit an dem lichtdurchlässigen Element, welches vorzugsweise aus Glas, besonders vorteilhaft aus Borsilikat besteht, festsetzen und bei Einsetzen des Trocknungsvorganges gegebenenfalls eine entsprechende Ablagerung, eine Kalkablagerung hinterlassen. Erfindungsgemäß wird das Ausmaß des Belags, insbesondere der Kalkablagerungen, über ein optisches Signal gemessen. Die Messung beruht auf folgenden physikalischen Phänomen.

Das von dem ein optisches Signal aussendenden Element emittierte Licht (bspw. Infrarotlicht) tritt über die erste Abschlussfläche in das lichtdurchlässige Element ein und wird aufgrund der im lichtdurchlässigen Element stattfindenden Reflexion ständig an der Grenzfläche zwischen dem lichtdurchlässigen Element und der umschließenden Atmosphäre so reflektiert, dass der Lichtstrahl bzw. das Lichtbündel im wesentlichen mit Streuverlusten durch das lichtdurchlässige Element strahlt und schließlich durch die zweite Abschlussfläche austritt und in das ein optisches Signal empfangende Element eintritt. Durch die im lichtdurchlässigen Element stattfindende Totalreflexion ist der Helligkeitswert bedingt, der einen bestimmten Energiewert entspricht. Ein Energiedifferenzbetrag zwischen dem optischen Signal aussendenden Element und dem optischen Signal empfangenden Element beruht auf einer gewissen Abstrahlungsleistung des lichtdurchlässigen Elements und findet bei der Verarbeitung des Signalwerts entsprechende Berücksichtigung.

Sobald das lichtdurchlässige Element von Spülflüssigkeit benetzt wird und entsprechende Ablagerungen, z.B. Kalkablagerungen während des Trocknungsvorganges auf dem lichtdurchlässigen Element anhaften, wird an diesen Bereichen der Brechungsindex zwischen dem lichtdurchlässigen Element und der unmittelbar daran anschließenden Ablagerungsschicht so verändert, dass die Anzahl der Totalreflexionen an der Grenzschicht des lichtdurchlässigen Elements sinkt. Denn tritt ein Lichtstrahl bzw. ein Lichtbündel unter einem bestimmten Winkel auf die Grenzfläche des lichtdurchlässigen Elements auf und ist dieser Bereich des lichtdurchlässigen Elements mit einer Ablagerungsschicht bedeckt, so tritt ein gewisser Anteil des Lichtbündels aus dem lichtdurchlässigen Element heraus und wird nicht in das lichtdurchlässige Element reflektiert. Da das optische Signal empfangende Element die Energiestärke bzw. Lichtstärke des austretenden Lichtes aus dem lichtdurchlässigen Element misst, wird die empfangene Lichtstärke mit einem entsprechenden Belag z.B. einer Kalkablagerung auf dem lichtdurchlässigen Element in Verbindung gesetzt.

Mit der erfindungsgemäßen Vorrichtung kann somit der Beginn einer Ablagerung auf dem lichtdurchlässigen Element, welches vorzugsweise aus Glas besteht, ermittelt werden, so dass frühzeitig entsprechende Maßnahmen, z.B. bei einer festgestellten Kalkablagerung zur Wasserenthärtung, ergriffen werden können. Erfindungsgemäß können bereits Ablagerungen, z.B. Kalkablagerungen, auf dem lichtdurchlässigen Element festgestellt werden, bevor diese für das menschliche Auge sichtbar auf gläsernem Spülgut wahrgenommen werden können.

Nachdem ein gewisser Schwellenwert an Ablagerung, insbesondere an Kalkablagerung, festgestellt worden ist, wird der Regenerierungsprozess für den Ionenaustauscher gestartet und die normalerweise sehr dünnen Ablagerungen, insbesondere Kalkablagerungen, auf dem lichtdurchlässigen Element mit frisch enthärtetem Wasser und ggf. mit Spülmittel gereinigt. Um ein reproduzierbares Umspülungsgefüge in dem kammerartigen Bereich zu erzielen, weist der kammerartige Bereich eine Öffnung auf, die vorzugsweise so ausgebildet ist, dass keine Speisereste in den kammerartigen Bereich eindringen können. Hierzu ist vorzugsweise eine gitterartige Abdeckung vorgesehen, wobei das Spaltmaß für die jeweilige Gitteröffnungen so bemessen sein sollte, dass herkömmliche, oft anzutreffende Speiserestepartikel, wie beispielsweise Zitrusfruchtkeme nicht hindurch dringen können.

Nachdem der kammerartige Bereich mit Spülflüssigkeit gefüllt worden ist, ruht dieser für einen vorbestimmten Zeitraum im kammerartigen Bereich, um den in der Spülflüssigkeit befindlichen Bestandteile, insbesondere darin gelösten Härtebildnern Zeit für die Ablagerung an dem lichtdurchlässigen Element einzuräumen. Zum Entleeren des kammerartigen Bereichs weist die erfindungsgemäße Vorrichtung ein Ventil auf, welches so angeordnet ist, dass der kammerartige Bereich vollständig geleert werden kann. Zur Ausbildung des Ventils können herkömmliche Magnetventile verwendet werden oder auch Ventile Einsatz finden, die mechanisch betätigbar sind. Besonders vorteilhaft sind Ventile, deren Aktivierung mit Stellelementen aus Memorymetall vorgenommen werden kann.

Um einen Ablagerungsprozess, z.B. den Kalkablagerungsprozess, wie er während der Trocknungsphase im Spülbehälter der Geschirrspülmaschine stattfindet, realistisch nachzuempfinden, wird mit dem Heizelement die feuchte Atmosphäre im kammerartigen Bereich erwärmt und somit das lichtdurchlässige Element getrocknet. Bei diesem Trocknungsprozess bildet sich bei nicht vollständig enthärtetem Wasser eine Kalkablagerung auf dem lichtdurchlässigen Element aus und diese Kalkablagerung wird anhand des oben geschilderten Messverfahrens bestimmt.

Das Funktionsprinzip und eine bevorzugte Ausführungsform der vorliegenden Erfindung wird in den nachfolgenden Zeichnungen detailliert an dem Beispiel Kalkablagerungen erläutert. Es zeigen:
- Figur 1: eine schematische Darstellung der Funktionsweise des lichtdurchlässigen Elements und der beiden Signal empfangenden und aussendenden Elemente,
- Figur 2a/2b: das Funktionsprinzip der erfindungsgemäßen Vorrichtung anhand schematischer dargestellter lichtdurchlässiger Elemente,
- Figur 3: eine Schnittdarstellung einer bevorzugten Ausführungsform der erfindungsgemäßen Vorrichtung,
- Figur 4: eine Draufsicht auf die bevorzugte Ausführungsform gemäß Figur 3 und
- Figur 5: eine Draufsicht auf die bevorzugte Ausführungsform gemäß Figur 3 und 4.

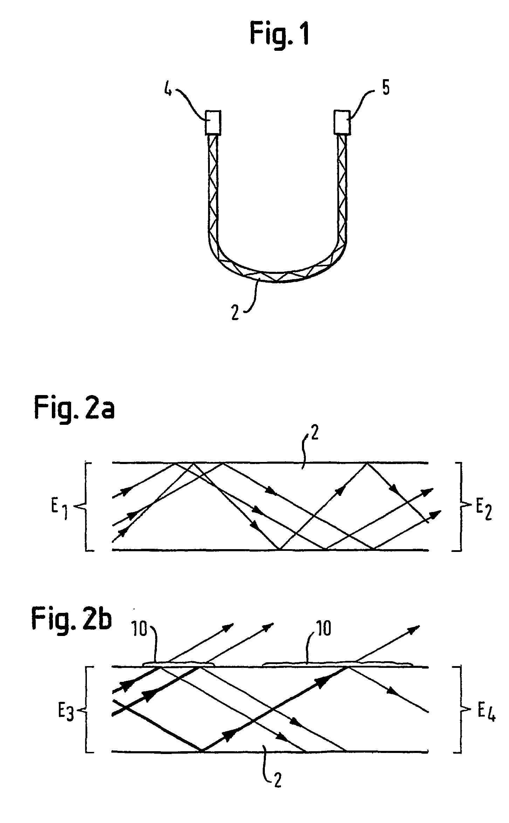

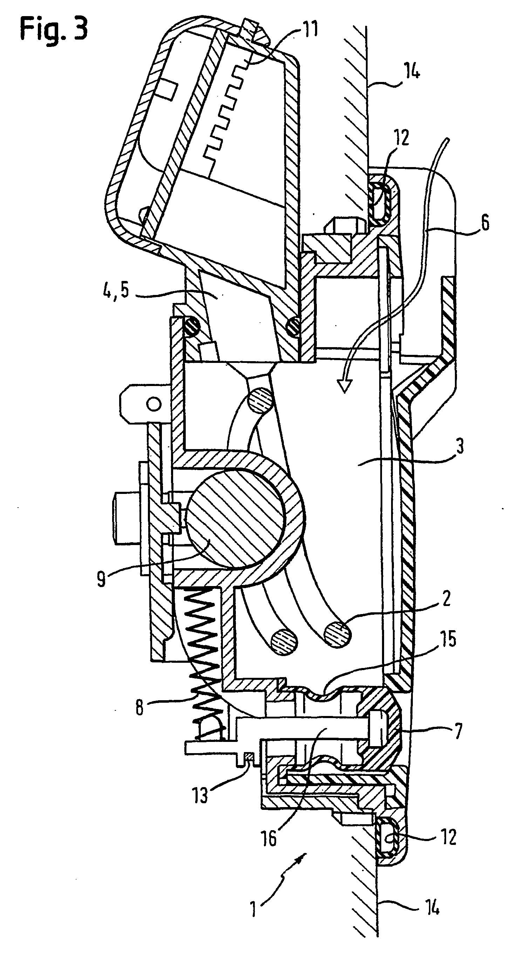

Gemäß Figur 1 ist ein ein optisches Signal aussendendes Element 4 und ein ein optische Signal empfangendes Element 5 über ein lichtdurchlässiges Element 2 miteinander verbunden, wobei für die Form des lichtdurchlässigen Elements eine U-Form gewählt worden ist. Bei der gemäß Figur 3, 4, 5 gezeigten bevorzugten Ausführungsform ist das lichtdurchlässige Element wendelartig ausgebildet und weist somit den Vorteil auf, eine längere Lichtstrecke für die Messung zu verwenden. Das lichtdurchlässige Element kann auch ungekrümmt ausgebildet sein, insbesondere kann die Ausbildung eines stabförmigen, lichtdurchlässigen Elements vorteilhaft sein. Bei der Verwendung eines stabförmigen, lichtdurchlässigen Elements können mehrere Elemente nebeneinander in dem kammerartigen Bereich angeordnet sein, um beispielsweise eine gewisse Redundanz bei der Messung zu erhalten. Bei der Verwendung von mehreren lichtdurchlässigen Elementen kann ferner das Lichtspektrum breiter gewählt werden, d.h. der bevorzugte Infrarotbereich kann bei den einzelnen lichtdurchlässigen Elementen und der damit verbundenen optische Signal aussendenden/empfangenden Elemente variiert werden.

Das der erfindungsgemäßen Vorrichtung zugrunde liegende physikalische Phänomen ist in der Figur 2a/b dargestellt, wobei das von dem optischen Signal aussendenden Element 4 ausgesendete Licht ein Energieniveau E₁ und nach Durchlaufen des lichtdurchlässigen Elements 2 an dem optischen Signal empfangenden Element ein Energieniveau E₂ aufweist. Ist, wie in Figur 2a dargestellt, das lichtdurchlässige Element 2 ohne Verschmutzung, d.h. Kalkablagerungen oder sonstigen Belag, werden im wesentlichen alle Lichtstrahlen, die von dem optischen Signal aussendenden Element 4 in das lichtdurchlässige Element 2 entsandt werden, aufgrund der Totalreflexion zwischen dem lichtdurchlässigen Element und der umgebenden Atmosphäre bis zum Erreichen des optischen Signal empfangenden Elements 5 reflektiert und verlassen das lichtdurchlässige Element nicht. Aufgrund dessen entspricht das Energieniveau E₁ im wesentlichen dem Energieniveau E₂, so dass bei Bestimmung dieser beiden Energieniveaus festgestellt wird, dass keine Verschmutzung oder Belag, d.h. Kalkablagerung auf dem lichtdurchlässigen Element 2 vorliegt.

Wird das lichtdurchlässige Element von nicht ausreichend enthärtetem Wasser umspült und anschließend getrocknet, so bilden sich Kalkablagerungen 10 die zumindest teilweise die Außenfläche des lichtdurchlässigen Elements 2 bedecken. Bei Durchstrahlen des lichtdurchlässigen Elements 2 wird auf Seiten des optischen Signal aussendenden Elements 4 das Energieniveau E₃ und auf Seiten des optischen Signal empfangenden Elements 5 das Energieniveau E₄ empfangen. Entsprechend der Kalkablagerung 10 ist festzustellen, dass das Energieniveau E₄ wesentlich geringer ist als das Energieniveau E₃, so dass nach Bestimmen des Energieniveaus E₄ der Grad der Kalkablagerung bzw. der Verschmutzung des lichtdurchlässigen Elements 2 festgestellt werden kann.

Beispielsweise wird zur Verarbeitung des Energieniveaus E₄ dieses betragsmäßig invertiert und liegt dann als positive Spannung vor. Die dem optischen Signal empfangenden Element nachgeschaltete Programmsteuereinheit verarbeitet dieses positive Messsignal und leitet aufgrund vorhandener Messdaten ein entsprechendes Messergebnis ab. Je nach Einstellung und Programmsteuerung wird bei Erreichen eines Schwellenwertes bzw. Verschmutzungsgrades die Regenerierung des Ionentauschers aktiviert, um so enthärtetes Wasser entsprechender Güte für den nächsten Spülprogrammablauf zur Verfügung zu haben.

Figur 3 zeigt eine Schnittdarstellung durch eine bevorzugte Ausführungsform der vorliegenden Erfindung, die in einem wasserführendes Haushaltgerät Anwendung findet. Vorzugsweise wird die erfindungsgemäße Vorrichtung 1 in die Innentür 14 einer Geschirrspülmaschine eingebaut und zur Abdichtung zwischen dem Spülbehälter und der Türinnenseite über entsprechende Dichtungselemente 12 abgedichtet. Während des Spülprogramms fließt Spülflüssigkeit entlang der Pfeilrichtung 6 in den kammerartigen Bereich 3, füllt diesen auf und benetzt dadurch die lichtdurchlässigen Elemente 2, die als Wendel ausgebildet sind. Nach erfolgter Benetzung wird der kammerartige Bereich 3 über das Ventil 7 entleert und der kammerartige Bereich 3 mittels Heizelement 9 so erwärmt, dass das benetzte lichtdurchlässige Element 2 trocknet. Erfolgt die Benetzung mit nicht ausreichend enthärtetem Wasser bildet sich eine Kalkablagerung auf dem lichtdurchlässigen Element 2 aus, die mittels beschriebener Meßmethode unter Verwendung der Elemente 4, 5 bestimmt wird. Zweckmäßigerweise wird vor dem Trocknungsvorgang der kammerartige Bereich 3 mehrmals geflutet und entleert, um so reproduzierbare Ergebnisse zu erhalten. Als Heizelement 9 wird vorzugsweise ein sogenanntes PTC (Positive Temperature Component) -Element verwendet, welches eine bestimmte Stromcharakteristik ausbildet und in der Lage ist, den kammerartigen Bereich 3 auf eine gleichmäßige Temperatur von beispielsweise über 100°C zu erwärmen. Zur Betätigung des Ventils ist in der bevorzugten Ausführungsform gemäß Figur 3 ein sogenannter Memorydraht 13 vorgesehen, der bei Erwärmen, d.h. bei Durchfluss einer bestimmten Stromstärke seine Form verändert und das Ventil 7 öffnet. Zweckmäßigerweise besteht Ventil 7 aus einem gummielastischem Bereich 15 und einem stiftartigem Element 16, welches aufgrund der Formveränderung des Memorydraht 13 seine Lage verändert und somit das Ventil 7 öffnet. Nach Abkühlung des Memorydrahts 13 überwiegt die von der Rückstellfeder 8 aufgebrachte Kraft und bewegt den Stift 16 zusammen mit dem gummielastischen Bereich 15 so, dass das Ventil 7 geschlossen wird.

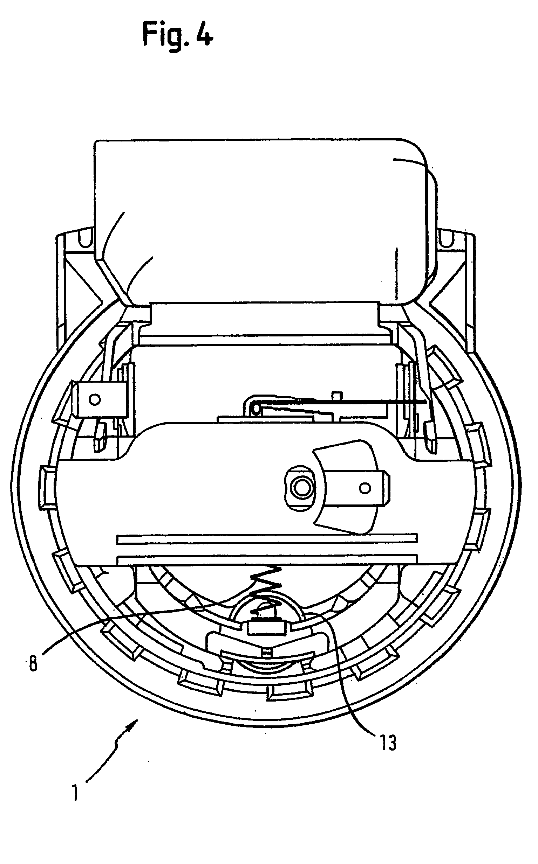

In der Rückansicht der erfindungsgemäßen Vorrichtung gemäß Figur 4 ist der Memorydraht 13 sowie die Rückstellfeder 8 dargestellt, sowie ferner die bevorzugte runde Ausgestaltung der erfindungsgemäßen Vorrichtung 1.

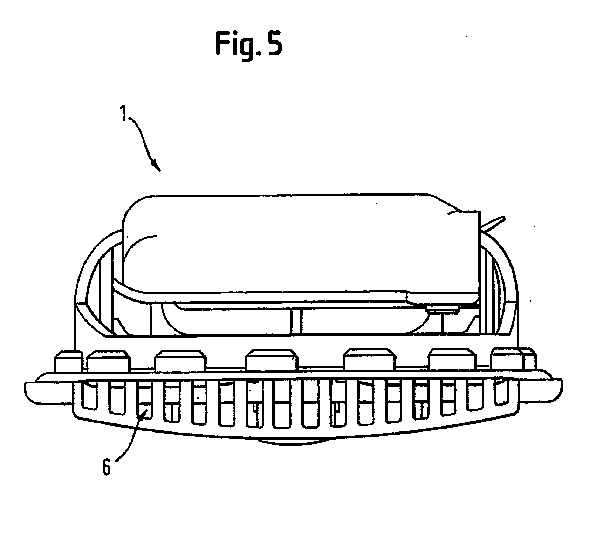

Figur 5 zeigt eine Draufsicht auf die erfindungsgemäße Vorrichtung 1 wobei insbesondere der kammartige Öffnungsbereich der Öffnung 6 dargestellt ist, der vorteilhafterweise so ausgebildet und bemessen ist, dass Speisereste nicht in den kammerartigen Bereich 3 der erfindungsgemäßen Vorrichtung 1 dringen können.

Mit der vorliegenden Erfindung ist eine Vorrichtung 1 bereitgestellt, welche es erlaubt, die Belagbildung, z.B. den Wasserhärtegrad, bzw. einen Tendenzverlauf der Belagbildung, z.B. des Wasserhärtegrades, zu bestimmen und entsprechende Maßnahmen zur Einstellung einer gewünschten Belagbildung, z.B. eines gewünschten Wasserhärtegrades, zu erzielen.

## Patentansprüche

1. Wasserführendes Gerät, insbesondere für den Haushalt, mit einer Vorrichtung zur Überprüfung der Belagbildung (10), bestehend aus einem lichtdurchlässigen Element (2) mit zwei Abschlussflächen, das in einem kammerartigen Bereich (3) angeordnet ist, welche mindestens eine Öffnung aufweist, die in einen Innenraum des wasserführenden Haushaltgeräts mündet und der kammerartige Bereich (3) ein Ventil (7) aufweist, welches dazu geeignet ist, den kammerartigen Bereich (3) zu entleeren, wobei die Abschlussflächen so angeordnet sind, dass diese stets frei von Belag sind, und mit mindestens einem ein optisches Signal aussendendes Element (4) und mindestens einem ein optisches Signal empfangendes Element (5), **dadurch gekennzeichnet, dass** das lichtdurchlässige Element (2) so ausgebildet ist, dass jeweils das das optische Signal aussendende und das das optische Signal empfangende Element (4, 5) an die Abschlussflächen unmittelbar anschließt und der Betrieb des Ventils (7) und die Trocknung des lichtdurchlässigen Elements (2) durch dasselbe Heizelement (9) erfolgt.

2. Wasserführendes Gerät nach Anspruch 1, **dadurch gekennzeichnet, dass** es eine Geschirrspülmaschine ist.

3. Vorrichtung nach Anspruch 1 oder 2, **dadurch gekennzeichnet, dass** das lichtdurchlässige Element (2) stabförmig ausgebildet ist.

4. Vorrichtung nach einem der Ansprüche 1 bis 3, **dadurch gekennzeichnet, dass** das stabförmige Element (2) wendelartig geformt ist.

5. Vorrichtung nach einem der vorherigen Ansprüche, **dadurch gekennzeichnet, dass** das Ventil (7) über ein Stellelement mit Memoryeffekt betreibbar ist.

6. Vorrichtung nach einem der vorherigen Ansprüche, **dadurch gekennzeichnet, dass** das optische Signal in einer Steuereinheit verarbeitet wird.

## Claims

1. Water-conducting appliance, particularly for the household, with a device for checking the coating formation (10), consisting of a light-permeable element (2) with two terminating surfaces, which is arranged in a chamber-like region (3) having at least one opening, which communicates with an interior space of the water-conducting domestic appliance, and the chamber-like region (3) has a valve (7) suitable for the purpose of emptying the chamber-like region (3), wherein the terminating surfaces are so arranged that these are always free of coating, and with at least one element (4) transmitting an optical signal and at least one element (4) receiving an optical signal, **characterised in that** the light-permeable element (2) is so constructed that the element (4) transmitting the optical signal and the element (5) receiving the optical signal are respectively directly connected with the terminating surfaces and the operation of the valve (7) and drying of the light-permeable element (2) are carried out by the same heating element (9).

2. Water-conducting appliance according to claim 1, **characterised in that** it is a dishwashing machine.

3. Device according to claim 1 or 2, **characterised in that** the light-permeable element (2) is of rod-shaped construction.

4. Device according to any one of claims 1 to 3, **characterised in that** the rod-shaped element (2) is helically shaped.

5. Device according to any one of the preceding claims, **characterised in that** the valve (7) is operable by way of a setting element with memory effect.

6. Device according to any one of the preceding claims, **characterised in that** the optical signal is processed in a control unit.

## Revendications

1. Appareil à circulation d'eau, notamment à usage domestique, comprenant un dispositif pour contrôler la formation d'un dépôt (10), constitué d'un élément (2) perméable à la lumière doté de deux surfaces terminales, qui est disposé dans une zone en forme de chambre (3), laquelle présente au moins une ouverture aboutissant dans un espace intérieur de l'appareil ménager à circulation d'eau, et la zone en forme de chambre (3) présentant une vanne (7) qui est apte à vider la zone en forme de chambre (3), les surfaces terminales étant disposées de manière à ce que celles-ci soient toujours exemptes de dépôt, et d'au moins un élément (4) émettant un signal optique et d'au moins un élément (5) recevant un signal optique, **caractérisé en ce que** l'élément (2) perméable à la lumière est exécuté de telle manière que l'élément (4) émettant le signal optique et l'élément (5) recevant le signal optique se raccordent respectivement directement aux surfaces terminales et **en ce que** le fonctionnement de la vanne (7) et le séchage de l'élément (2) perméable à la lumière sont réalisés au moyen du même élément de chauffage (9).

2. Appareil à circulation d'eau selon la revendication 1, **caractérisé en ce que** c'est un lave-vaisselle.

3. Dispositif selon la revendication 1 ou 2, **caractérisé en ce que** l'élément (2) perméable à la lumière est exécuté en forme de barre.

4. Dispositif selon l'une quelconque des revendications 1 à 3, **caractérisé en ce que** l'élément (2) en forme de barre est formé comme une spirale.

5. Dispositif selon l'une quelconque des revendications précédentes, **caractérisé en ce que** la vanne (7) est entraînable par l'intermédiaire d'un élément de réglage à effet de mémoire.

6. Dispositif selon l'une quelconque des revendications précédentes, **caractérisé en ce que** le signal optique est traité dans une unité de commande.
